# EUROPÄISCHE PATENTSCHRIFT

(11) **EP 1 441 146 B1**
(45) Veröffentlichungstag und Bekanntmachung des Hinweises auf die Patenterteilung: **04.01.2006**
(21) Anmeldenummer: 03024181.4
(22) Anmeldetag: 21.10.2003
(51) Int. Cl.: F16F 9/05, F16F 9/36, F16F 9/084, F16F 9/32

(54) **Schwingungsdämpfer**
Vibration damper
Amortisseur de vibrations

(30) Priorität: 22.01.2003 DE 10302211
(43) Veröffentlichungstag der Anmeldung: 28.07.2004
(73) Patentinhaber: ZF Sachs AG, 97424 Schweinfurt (DE)
(72) Erfinder: Brehm, Stefan, 53773 Hennef (DE); Brandhofer, Jörg, 53783 Eitorf (DE); Müller, Michael, 53773 Hennef (DE)

(56) Entgegenhaltungen:
- EP-A- 0 976 947
- US-A- 4 529 213
- US-A- 4 911 416
- US-A- 5 180 144
- US-A- 5 669 597

## Beschreibung

Die Erfindung betrifft einen Schwingungsdämpfer, umfassend ein Dämpfungselement und eine Luftfeder, wobei das Dämpfungselement ein Behälterrohr aufweist, welches mit einem Abrollkolben der Luftfeder verbunden ist, wobei der Abrollkolben über einen als Rollbalg wirkenden Luftfederbalg mit einer konzentrisch und relativ zum Abrollkolben axial beweglich angeordneten Außenführung verbunden ist und wobei der Luftfederbalg und der Abrollkolben einen mit einer unter Druck stehenden Gasfüllung versehenen Gasraum begrenzen, wobei auf dem Behälterrohr eine umlaufende erste Kontur angeordnet ist, die aus einer Nut, einer Mantelfläche sowie einem Anschlag zur gasdichten axialen Befestigung des Abrollkolbens aufweist.

Schwingungsdämpfer der vorgenannten Art werden an Fahrzeugen, beispielsweise an einer Aufhängung eines Fahrerhauses auf einem Fahrwerk eines Nutzkraftfahrzeugs angewendet, um die von der Straße über die Radaufhängungen in das Fahrwerk eingeleiteten Schwingungen vom Fahrerhaus weitgehend fern zu halten. Hierbei ist die Außenführung der Luftfeder und eine Kolbenstange des Dämpfungselements mit dem Fahrerhaus und das Dämpfungselement über ein Befestigungsteil mit dem Fahrwerk verbunden, wobei die Luftfeder in Ihrer Wirkung von ihren geometrischen Abmessungen, dem herrschenden Druck im Gasraum und vom Profil des Abrollkolbens, auf dem der Luftfederbalg abrollt, abhängig ist. Während die Lösung des Problems, nämlich den Gasraum, der sich auch auf den Raum um die Kolbenstange erstreckt, um das Behälterrohr herum durch die Verwendung eines O-Ringes zwischen dem Abrollkolben der Luftfeder und dem Behälterrohr des Dämpfungselements gegen die Atmosphäre abzudichten, zum Stand der Technik gehört, wurde zur Ableitung der durch den hohen Druck im Gasraum wirkenden axialen Kraftkomponente auf das Behälterrohr bisher eine Konstruktion gewählt, die einen Adapterring vorsieht, der nur unter hohem fertigungstechnischem Aufwand herzustellen ist und mit dem Behälterrohr verschweißt werden muss. Überdies ist der O-Ring im Adapterring oder in der Nähe desselben angeordnet, was die Konstruktion kompliziert und verteuert. Eine Kontur des Abrollkolbens stützt sich am Adapterring axial ab, der die axial wirkenden Kräfte der Luftfeder auffängt und in das Behälterrohr ableitet. Je höher aber die Stückzahlen sind, desto größer wird der Bedarf nach einer Rationalisierung der vorgenannten Abstützung und Abdichtung des Abrollkolbens auf dem Behälterrohr.

Es sind Luftfeder-Aggregate bekannt (z.B. US 5,669,597), welches ein Dämpfungselement und eine Luftfeder umfasst, wobei das Dämpfungselement ein Behälterrohr aufweist, welches mit einem Abrollkolben der Luftfeder verbunden ist, wobei der Abrollkolben über einen als Rollbalg wirkenden Luftfederbalg mit einer konzentrisch und relativ zum Abrollkolben axial beweglich angeordneten Außenführung verbunden ist und wobei der Luftfederbalg und der Abrollkolben einen mit einer unter Druck stehenden Gasfüllung versehenen Gasraum begrenzen, wobei auf dem Behälterrohr eine umlaufende erste Kontur angeordnet ist, die eine Nut, eine Mantelfläche sowie einen Anschlag zur gasdichten axialen Befestigung des Abrollkolbens aufweist.

Bei dem in der US-PS 5,669,697 gezeigten Schwingungsdämpfer ist die auf dem Behälterrohr angeordnete umlaufende Kontur nicht durch Umformen desselben erzeugt, sondern durch Anschweißen eines Adapterringes.

Die vorliegende Erfindung schlägt zur axialen Abstützung des Abrollkolbens auf dem Behälterrohr und zur Abdichtung des Abrollkolbens gegen das Behälterrohr vor, auf den kostenintensiven Adapterring zu verzichten und das Behälterrohr mit einer ersten Kontur zu versehen, die es ermöglicht, den Abrollkolben auf dem Behälterrohr auf einfache Weise zu verbinden und mit dieser Verbindung gleichzeitig die Abstützung mit der Abdichtung zu verbinden. Zu diesem Zweck weist diese erste Kontur eine umlaufende über den Außendurchmesser des Behälterrohres hinausgehende wulstartige Erhöhung auf, in die eine Schräge, eine Nut, eine Mantellinie und einen Absatz integriert sind. Die Nut ist zur Aufnahme eines Dichtrings bestimmt, der sich gegen die innere Oberfläche des Abrollkolbens anlegt, wenn dieser über die Mantelfläche der ersten Kontur auf dem Behälterrohr geschoben wird. Der Abrollkolben wird bei dieser Montage mit seiner Stirnseite an dem Absatz anschlagen, wobei er die für seine Funktion wichtige definierte Position einnimmt. Dabei ist der Abrollkolben mit einer konischen Erweiterung versehen, die es ermöglicht, dass der Abrollkolben sauber über die Schräge einfädelt und den Dichtring überfährt, ohne ihn zu verletzen und in seiner Dichtfunktion zu beeinträchtigen.

Das Behälterrohr weist noch eine zweite Kontur auf, deren Außendurchmesser über den d es B ehälterrohres hinausreicht und eine Anbindungsstelle für ein erstes Ende eines Faltenbalges aufweist, der mit seinem anderen Ende an der Außenführung befestigt ist und die empfindlichen sich gegen einander bewegenden Teile des Schwingungsdämpfers beim Betrieb des Fahrzeuges gegen Schmutz schützt. Da der Gasraum der Luftfeder unter ständigem Druck steht, ist es lediglich erforderlich, den Abrollkolben in der von der Luftfeder wegweisenden Richtung auf dem Behälterrohr des Dämpfungselements axial zu sichern. Der zu diesem Zweck auf dem Behälterrohr in die erste Kontur integrierte Absatz ragt über den Außendurchmesser des Behälterrohres hinaus und ist umlaufend angeformt, wobei es sich zu dessen Realisierung um ein Herstellungsverfahren handelt, das als Drückwalzen oder auch Fließdrücken/Runddrücken bezeichnet wird. Dieses Verfahren erlaubt die spanlose Herstellung und die reproduzierbar maßhaltige Kalibrierung aller zur Verbindung des Abrollkolbens mit dem Behälterrohr erforderlichen Konturen. Das Verfahren ist für eine Großserie geeignet und nach einmaliger Maschinen - und Vorrichtungsinvestition äußerst kostengünstig. Weiter unten wird das Verfahren ausführlich beschrieben.

Die er vorliegenden Erfindung hat es sich daher zur Aufgabe gemacht, einen Schwingungsdämpfer, bestehend aus einem Dämpfungselement und einer Luftfeder, zu schaffen, in welchem ein kostengünstig gefertigtes Behälterrohr des Dämpfungselementes derart ausgestaltet ist, dass ein Abrollkolben als Bestandteil der Luftfeder auf einfache Weise unter geringem Montageaufwand mit dem Behälterrohr unter Einhaltung der Anforderungen an Dichtheit und Festigkeit verbunden werden kann.

Die Lösung der Aufgabe ist in den Ansprüchen 1 und 5 beschrieben. Ausgestaltungen sind den Unteransprüchen zu entnehmen.

Anhand einiger Zeichnungen wird ein Ausführungsbeispiel eines Schwingungsdämpfers erläutert, bei welchem ein Abrollkolben einer Luftfeder auf einem Behälterrohr eines Dämpfungselements axial fixiert und gleichzeitig abgedichtet wird.

Es zeigen:
- Fig.1: einen aus einer Luftfeder und einem Dämpfungselement bestehenden Schwingungsdämpfer, bei dem ein Abrollkolben der Luftfeder und ein Behälterrohr des Dämpfungselements miteinander verbunden sind;
- Fig.2: die Position einer Stirnfläche des Abrollkolbens zu einem Absatz am Behälterrohr sowie die Position eines Dichtrings in einer Nut einer ersten Kontur in vergrößerter Darstellung;
- Fig.3: das Behälterrohr mit der ersten Kontur und einer zweiten Kontur;
- Fig.4: die erste Kontur, bestehend aus einer Schräge, der Nut, einer Mantelfläche und einem Absatz in Teilschnittdarstellung;
- Fig.5: die zweite Kontur, die als Verbindungsstelle für einen Faltenbalg dient.

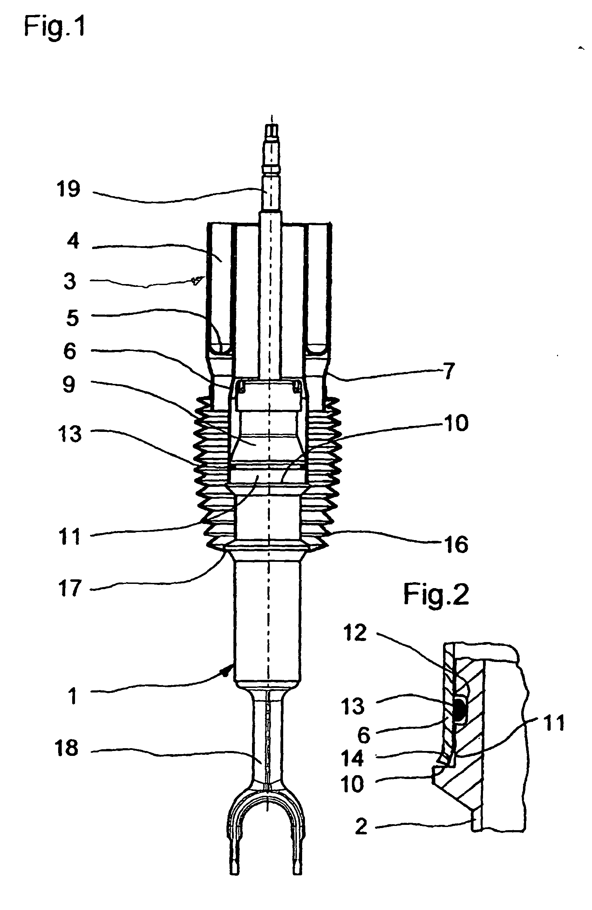

Fig.1 zeigt einen Schwingungsdämpfer, der aus einem Dämpfungselement 1 und einer Luftfeder 3 besteht, wobei das Dämpfungselement 1 ein Behälterrohr 2, ein Befestigungsteil 18 und eine Kolbenstange 1 9 aufweist und wobei die Luftfeder 3 aus einem als Rollbalg wirkenden Luftfederbalg 5, einem unter Druckvorspannung stehenden Gasraum 4, einer mit einer schwingungsarm zu haltenden Masse verbundenen Außenführung 7 und einem ein Abrollkolben 6 besteht. Der Luftfederbalg 5 verbindet als elastisches Element die Außenführung 7 mit dem Abrollkolben 6, wobei der Luftfederbalg 5 bei einer axialen Relativbewegung der Außenführung 7 gegenüber dem Abrollkolben 6 auf einem Abrollprofil des Abrollkolbens 6 abrollt und durch die Kompression des Gases die Funktion einer Feder übernimmt. Ein Faltenbalg 16 übernimmt die Abschirmung funktionswichtiger Teile gegen Schmutz und ist mit seinem ersten Ende mit der Außenführung 7 und mit seinem zweiten Ende über eine Anbindungsstelle 17 mit dem Behälterrohr 2 verbunden.

Fig.2 stellt in einer Teilschnitt - Vergrößerung die Fixierung des Abrollkolbens 6 auf dem Behälterrohr 2 dar und zeigt, wie der Abrollkolben 6 mit seiner Stirnfläche an einem Absatz 10 anliegt, wobei am Abrollkolben 6 im Bereich der Stirnfläche eine konische Erweiterung 14 angeordnet ist, deren Zweck es ist, einmal bei der Montage das Einfädeln über eine Schräge 9 auf eine Mantelfläche 11 einer ersten Kontur 8 zu erleichtern und zum anderen sicher zu stellen, dass ein Dichtring 13, der vorzugsweise als Rundschnurring ausgebildet ist und in einer Nut 12 auf der ersten Kontur 8 angeordnet ist, nicht durch scharfe Kanten beschädigt wird.

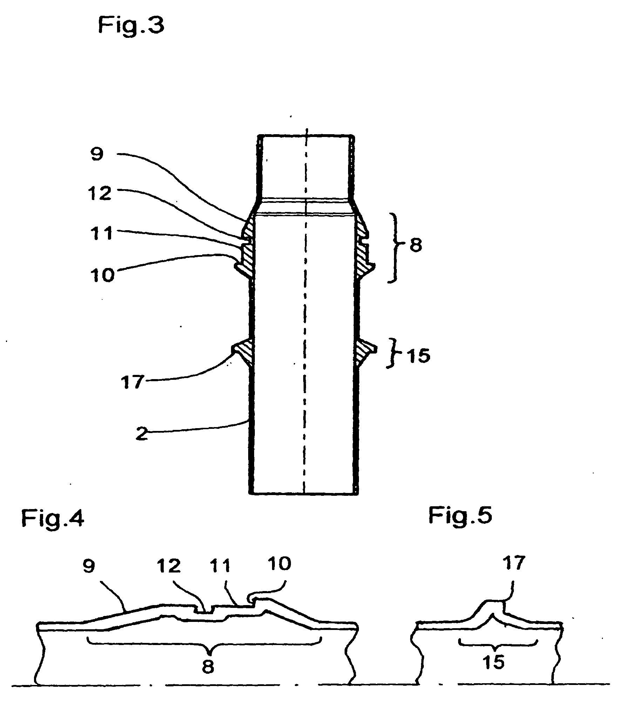

In Fig. 3 ist das Behälterrohr 2 im Längsschnitt dargestellt, um die Ausbildung und die Position der ersten Kontur 8 und einer zweiten Kontur 15 sichtbar zu machen. Die zweite Kontur dient mit der bereits erwähnten Anbindungsstelle 17 der Anordnung des Faltenbalgs 16, der dort formschlüssig befestigt werden kann.

Die Figuren 4 und 5 zeigen, wie die erste Kontur 8 und die zweite Kontur 15 an der Innenseite des Behälterrohres 2 ausgeformt sind, wenn das Behälterrohr 2 nach dem Drückwalzverfahren/Rundknetverfahren hergestellt werden. Hier wird mindestens eine Walze/Backe gegen das auf einen Dorn geschobene und rotierende Rohteil des Behälterrohres 2 gefahren, wodurch das Rohrmaterial unter dem hohen Druck der Walze/Backe zum Fließen kommt und Material je nach der Vorschubrichtung aufstaucht. Nach diesem Prinzip wird das Rohteil des Behälterrohres 2 am Ursprungsdurchmesser dünner und folgerichtig an den aufgestauchten Stellen dicker und vor allem im Durchmesser größer, sofern es an den Stirnseiten auf dem Dorn eingespannt ist und an der Änderung seiner ursprünglichen Länge gehindert wird. Im Falle der Erstellung der ersten Kontur 8 und/oder der zweiten Kontur 15 ist es von Vorteil, jeweils zwei Walzen gegeneinander zu bewegen, um gleichzeitig mit dem Prozess des Aufstauchens auch den Prozess des Kalibrierens zu erreichen. Auf diese Weise kann die erste Kontur 8 in einer Genauigkeit hergestellt werden, die den Anforderungen an die Funktion genügt, das heißt, die Schräge 9, die Nut 12, die Mantelfläche 11 und der Absatz 10 sind für das Fügen des Abrollkolbens 6 auf dem Behälterrohr 2, die erforderliche Überdeckung der beiden Durchmesser und die Abdichtung ausreichend maßhaltig herstellbar. Für besondere Anforderungen können Radien und Kanten an den Konturen 8 und 15 durch eine Drehoperation nachgearbeitet werden, was aber aus Kostengründen zu vermeiden ist.

Es wird daher zur Herstellung des Behälterrohres 2 ein Verfahren vorgeschlagen, mit welchem zur gasdichten Fixierung des Abrollkolbens 6 auf dem Behälterrohr 2 die erste Kontur 8 und zur Befestigung des Faltenbalges 16 die zweite Kontur 15 angeformt werden kann, wobei für das vorbeschriebene Verfahren des Drückwalzens/Rundknetens die folgenden Verfahrensschritte zur Anwendung kommen:
1. Bereitstellung einer für das Drückwalzverfahren/Rundknetverfahren geeigneten Maschine zum Drückwalzen/Rundkneten von Rohren;
2. Einspannen eines Rohrabschnittes vom Durchmesser des Behälterrohres 2 auf einer Vorrichtung;
3. Fixierung dieses Rohrabschnittes auf einem Dorn mit einer Einspannung an mindestens einem stirnseitigen Ende;
4. Versetzung des Dornes mit dem Rohrabschnitt in Drehung und Heranfahren von mindestens einer Drückwalze;
5. Anformen einer Nut 12, einer Mantelfläche 11, eines Absatzes 10 und einer Schräge 9 auf einer ersten Kontur 8 sowie wahlweise einer Anbindungsstelle 17 auf einer zweiten Kontur 15;
6. Wahlweise Überdrehen der Konturen 8, 15 zur Korrektur von Radien oder Auskehlungen.

Der Vorteil des Erfindungsgegenstands gegenüber dem Stand der Technik liegt darin, dass das Behälterrohr 2 durch einen für die Großserie geeigneten spanlosen Arbeitsgang für die Montage des Abrollkolbens 5 vorbereitet wird, wobei einfaches und kostengünstiges Fügen auf Anschlag zur Erstellung eines Unterzusammenbaues des Dämpfungselementes ausreicht.

### Bezugszeichenliste

- 1.: Dämpfungselement
- 2.: Behälterrohr
- 3.: Luftfeder
- 4.: Gasraum
- 5.: Luftfederbalg
- 6.: Abrollkolben
- 7.: Außenführung
- 8.: erste Kontur
- 9.: Schräge
- 10.: Absatz
- 11.: Mantelfläche
- 12.: Nut
- 13.: Dichtring
- 14.: Konische Erweiterung
- 15.: zweite Kontur
- 16.: Faltenbalg
- 17.: Anbindungsstelle
- 18.: Befestigungsteil
- 19.: Kolbenstange

## Patentansprüche

1. Schwingungsdämpfer, umfassend ein Dämpfungselement (1) und eine Luftfeder (3), wobei das Dämpfungselement (1) ein Behälterrohr (2) aufweist, welches mit einem Abrollkolben (6) der Luftfeder (3) verbunden ist, wobei der Abrollkolben (6) über einen als Rollbalg wirkenden Luftfederbalg (5) mit einer konzentrisch und relativ zum Abrollkolben (6) axial beweglich angeordneten Außenführung (7) verbunden ist und wobei der Luftfederbalg (5) und der Abrollkolben (6) einen mit einer unter Druck stehenden Gasfüllung versehenen Gasraum (4) begrenzen, wobei auf dem Behälterrohr (2) eine umlaufende erste Kontur (8) angeordnet ist, die eine Nut (12), eine Mantelfläche (12) sowie einen Anschlag (10) zur gasdichten axialen Befestigung des Abrollkolbens (5) aufweist,
**dadurch gekennzeichnet,**
**dass** auf dem Behälterrohr eine zweite Kontur angeordnet ist und dass die erste Kontur (8) und wahlweise die zweite Kontur (15) auf dem Behälterrohr (2) Materialanstauchungen sind, die durch das Drückwalzverfahren/Rundknetverfahren erzeugt werden.

2. Schwingungsdämpfer nach Anspruch 1,
**dadurch gekennzeichnet,**
**dass** die zweite Kontur (15) eine Anbindungsstelle (17) zur Befestigung eines Faltenbalges (16) aufweist.

3. Schwingungsdämpfer nach Anspruch 1,
**dadurch gekennzeichnet,**
**dass** die Materialanstauchung der erste Kontur (8) an ihren Umfangsbereichen unter Ausbildung der umlaufenden Nut (12), der Mantelfläche (11), des Absatzes (10) und der Schräge (9) sowie die Materialanstauchung der zweiten Kontur (15) unter Ausbildung der Anbindungsstelle (17) spanlos hergestellt und maßhaltig kalibriert sind.

4. Schwingungsdämpfer nach einem der Ansprüche 1 bis 3,
**dadurch gekennzeichnet,**
**dass** eine Stirnseite des Abrollkolbens (6) am Absatz (10) der ersten Kontur (8) anschlägt, wobei der Abrollkolben (6) im Bereich dieser Stirnseite als Montagehilfe eine konische Erweiterung (14) seines Innendurchmessers aufweist.

5. Verfahren zur Herstellung eines Schwingungsdämpfers, umfassend ein Dämpfungselement (1) und eine Luftfeder (3), wobei das Dämpfungselement (1) ein Behälterrohr (2) aufweist, welches mit einem Abrollkolben (6) der Luftfeder (3) verbunden ist, wobei für die Herstellung des Behälterrohres (2) ein Verfahren vorgeschlagen wird, mit welchem zur gasdichten Fixierung des Abrollkolbens (6) auf dem Behälterrohr (2) eine erste Kontur (8) und zur Befestigung des Faltenbalges (16) eine zweite Kontur (15) angeformt werden kann, wobei für das Verfahren die folgenden Verfahrensschritte zur Anwendung kommen:
a. Bereitstellung einer für das Drückwalzverfahren geeignete Maschine zum Drückwalzen von Rohren;
b. Einspannen eines Rohrabschnittes vom Durchmesser des Behälterrohres (2) auf einer Vorrichtung;
c. Fixierung dieses Rohrabschnittes auf einem Dorn mit einer Einspannung an mindestens einem stirnseitigen Ende;
d. Versetzung des Dornes mit dem Rohrabschnitt in Drehung und Heranfahren von mindestens einer Drückwalze;
e. Anformen einer Nut (12), einer Mantelfläche (11), eines Absatzes (10) und einer Schräge (9) auf einer ersten Kontur (8) sowie wahlweise einer Anbindungsstelle (17) auf einer zweiten Kontur (15);
f. Wahlweise Überdrehen der Konturen (8, 15) zur Korrektur von Radien oder Auskehlungen.

## Claims

1. Vibration damper, comprising a damping element (1) and an air spring (3), the damping element (1) having a container tube (2) which is connected to a rolling piston (6) of the air spring (3), the rolling piston (6), via an air spring bellows (5) acting as a rolling bellows, being connected to an outer guide (7) arranged concentrically and in an axially movable manner relative to the rolling piston (6), and the air spring bellows (5) and the rolling piston (6) defining a gas space (4) provided with a gas filling which is under pressure, an encircling first contour (8) being arranged on the container tube (2) and having a groove (12), a lateral surface (11) and a stop (10) for the gas-tight axial fastening of the rolling piston (6), **characterized in that** a second contour is arranged on the container tube, and **in that** the first contour (8) and optionally the second contour (15) are upset material portions on the container tube (2), these upset material portions being produced by the flow-forming process/rotary-swaging process.

2. Vibration damper according to Claim 1, **characterized in that** the second contour (15) has a connecting point (17) for fastening a folding bellows (16).

3. Vibration damper according to Claim 1, **characterized in that** the upset material portion of the first contour (8), at its circumferential regions, with the encircling groove (12), the lateral surface (11), the step (10) and the bevel (9) being formed, and the upset material portion of the second contour (15), with the connecting point (17) being formed, are produced by non-cutting shaping and are calibrated accurately to size.

4. Vibration damper according to one of Claims 1 to 3, **characterized in that** a front end of the rolling piston (6) strikes the step (10) of the first contour (8), the rolling piston (6) having, as an assembly aid, conical widening (14) of its inside diameter in the region of this front end.

5. Method of producing a vibration damper, comprising a damping element (1) and an air spring (3), the damping element (1) having a container tube (2) which is connected to a rolling piston (6) of the air spring (3), a method of producing the container tube (2) being proposed with which a first contour (8) can be integrally formed for fixing the rolling piston (6) on the container tube (2) in a gas-tight manner and a second contour (15) can be integrally formed for fastening the folding bellows (16), the following method steps being used for the method:
a. providing a machine, suitable for the flow-forming process, for the flow forming of tubes;
b. clamping a tube section of the diameter of the container tube (2) in place on a device;
c. fixing this tube section on a mandrel with clamping at least at one front end;
d. setting the mandrel with the tube section in rotation and advancing at least one flow forming roller;
e. integrally forming a groove (12), a lateral surface (11), a step (10) and a bevel (9) on a first contour (8) and also optionally integrally forming a connecting point (17) on a second contour (15);
f. optionally turning the outside diameter of the contours (8, 15) for correcting radii and channels.

## Revendications

1. Amortisseur de vibrations, comprenant un élément d'amortissement (1) et un ressort pneumatique (3), l'élément d'amortissement (1) présentant un réceptacle tubulaire (2) qui est relié à un piston de roulement (6) du ressort pneumatique (3), le piston de roulement (6) étant relié, par l'intermédiaire d'un soufflet de suspension pneumatique (5) jouant le soufflet roulant, à un guide extérieur (7) disposé concentriquement et axialement mobile par rapport au piston de roulement (6), et le soufflet de suspension pneumatique (5) et le piston de roulement (6) délimitant une chambre de gaz (4) pourvue d'un remplissage de gaz sous pression, sachant qu'un premier contour entourant (8) est disposé sur le réceptacle tubulaire (2), contour qui présente une rainure (12), une surface cylindrique (11) ainsi qu'une butée (10) pour la fixation axiale du piston de roulement (6) en étanchéité au gaz,
**caractérisé en ce qu'**un deuxième contour est disposé sur le réceptacle tubulaire, et **en ce que** le premier contour (8) et sélectivement le deuxième contour (15) sont des écrasements de matière sur le réceptacle tubulaire (2), qui sont produits par le procédé de fluotournage/épointage rotatif.

2. Amortisseur de vibrations selon la revendication 1, **caractérisé en ce que** le deuxième contour (15) présente un point d'attache (17) pour la fixation d'un soufflet (16).

3. Amortisseur de vibrations selon la revendication 1, **caractérisé en ce que** l'écrasement de matière du premier contour (8) est réalisé sans enlèvement de matière et est étalonné dans le respect des cotes, avec formation sur ses régions périphériques de la rainure entourante (12), de la surface cylindrique (11), du gradin (10) et du chanfrein (9), et de même pour l'écrasement de matière du deuxième contour (15), avec formation du point d'attache (17).

4. Amortisseur de vibrations selon l'une quelconque des revendications 1 à 3, **caractérisé en ce qu'**une face frontale du piston de roulement (6) vient buter contre le gradin (10) du premier contour (8), sachant que le piston de roulement (6) présente dans la région de cette face frontale un élargissement conique (14) de son diamètre intérieur comme aide au montage.

5. Procédé de fabrication d'un amortisseur de vibrations comprenant un élément d'amortissement (1) et un ressort pneumatique (3), l'élément d'amortissement (1) présentant un réceptacle tubulaire (2) qui est relié à un piston de roulement (6) du ressort pneumatique (3), sachant qu'on propose pour la fabrication du réceptacle tubulaire (2) un procédé avec lequel on peut former sur le réceptacle tubulaire (2) un premier contour (8) pour la fixation en position en étanchéité au gaz du piston de roulement (6) et un deuxième contour (15) pour la fixation du soufflet (16), sachant qu'on applique pour le procédé les étapes suivantes :
a. mise à disposition d'une machine appropriée pour le fluotournage de tubes ;
b. serrage sur un dispositif d'un tronçon de tube ayant le diamètre du réceptacle tubulaire (2) ;
c. immobilisation de ce tronçon de tube sur un mandrin avec un serrage à au moins une extrémité frontale ;
d. mise en rotation du mandrin pourvu du tronçon de tube, et approchement d'au moins un cylindre de pression ;
e. formation d'une rainure (12), d'une surface cylindrique (11), d'un gradin (10) et d'un chanfrein (9) sur un premier contour (8), et sélectivement d'un point d'attache (17) sur un deuxième contour (15) ;
f. sélectivement, usinage complémentaire des contours (8, 15) par tournage, pour corriger des rayons ou gorges.
